# EUROPEAN PATENT APPLICATION

(11) **EP 1 344 729 A2**
(43) Date of publication of application: **17.09.2003**
(21) Application number: 03251458.0
(22) Date of filing: 11.03.2003
(51) Int. Cl.: B65G 17/12

(54) **Conveyor apparatus comprising pivotally mounted receptacles**

(30) Priority: 15.03.2002 GB 0206236
(71) Applicant: Snowball, Malcolm Robert, Epping, Essex CM16 6TW (GB)
(72) Inventor: Snowball, Malcolm Robert, Epping, Essex CM16 6TW (GB)
(74) Representative: Evans, Huw David Duncan

(57) **Abstract**

A bucket elevator or conveyor comprises a plurality of removable buckets 10 each pivotally supported between two drive chains 11. The buckets 10 are shaped such that their lips 26 overlap when they are travelling horizontally. In this manner, the buckets 10 can be filled without the risk of spillage.

The attitude of the buckets 10 are controlled by a guide rail 17 and this combined with shape of the leading and trailing walls 22,23 of the buckets 10 enables the buckets 10 to traverse bends in the vertical plane without interfering.

## Description

This invention relates to apparatus for conveying a product in a manufacturing or production facility for example.

In manufacturing or production facilities, the product (or a constituent of the product) being manufactured or produced is often conveyed between two points in a series of receptacles, which are fastened to driven chains or belts. The receptacles are filled with the product to be conveyed and the chain is driven, transporting the product to a discharge point. The receptacles are usually supported on pivots, which allow them to swing and to maintain their attitude regardless of the orientation of the chain: this allows the chain to traverse around sprockets provided at bends in the vertical plane without spilling the contents of the receptacles and also allows the contents to be emptied by tipping.

Such conveyors are known as swinging bucket elevators and suffer from several problems.

The receptacles are usually filled from a fixed point via a chute, whist the receptacles continuously pass underneath. A disadvantage of this is that the product can spill in the gap between adjacent receptacles. Spillage is undesirable, since it is wasteful, messy and can constitute a healthy hazard.

The problem of spillage is further exacerbated as the chain stretches over time, which causes the space between the adjacent receptacles to increase.

Many attempts have been made to solve the above-mentioned problem. However, such solutions have been complex and expensive. The problem is further complicated by the need for the chain, and hence the receptacles, to traverse around sprockets as the chain changes direction in the vertical plane, since the receptacles interfere with each other and jam if the spacing between adjacent receptacles is insufficient.

Hitherto this problem has precluded the use of a common design of receptacle for conveyor configurations in which the chain either follows a Z-shaped or C-shaped path in the vertical plane. The problem prevents the receptacles from being physically attached to one another without very complex and expensive interlocking mechanisms which span the gap between adjacent receptacles.

I have now devised a conveyor which alleviates the above-mentioned problems.

In accordance with this invention as seen from a first aspect, there is provided a conveyor comprising a plurality of upwardly-facing receptacles mounted in series to means for conveying the receptacles along an elongate path, each receptacle being pivotally mounted to said conveyor means for rotation about an axis which extends perpendicular to the direction of conveyance along said path, the receptacles each comprising opposed first and second end walls extending perpendicular to the direction of conveyance, and a lip across the upper end of said first wall which extends away from said second wall and overhangs the second wall of an adjacent receptacle, the outer end of the lip depending towards the interior of said adjacent receptacle, means being provided at least one point along said path for rotating the successive passing receptacles about said axis in a direction which brings the lip of one receptacle into a position where the outer end thereof extends into the interior of its adjacent receptacle.

In use, the material to be conveyed is loaded into the receptacles at the point where the receptacles are rotated. It will be appreciated that at this point, the lips bridge the gap between adjacent receptacles and thus spillage is avoided.

The lips extend sufficiently far for the gaps to be bridged even when the chain or belt stretches.

Under normal conditions, the lips of the receptacles only overhang their adjacent receptacle and thus the receptacles are free to move independently of each other without interfering and jamming.

Preferably, each receptacle is rotated in a first direction at said point to bring its lip down onto the adjacent receptacle.

Preferably the lip of each receptacle extends upwardly and outwardly from the upper end of its first wall and then outwardly and downwardly towards the interior of its adjacent receptacle.

Preferably the first and second walls of each receptacle converge towards the base of the receptacle.

Preferably the convergent walls curve inwardly towards each other, with the radius of curvature preferably substantially corresponding to the radius of curvature of bends in the path in the vertical plane: I have found that walls of this shape enable adjacent receptacles to be mounted very close together without the risk of them interfering and jamming as they change direction in the vertical plane.

When conveyors are used in the food industry, hygiene is vitally important and the receptacles must be regularly cleaned. In order to overcome this problem it is known to provide cleaning systems. However, these are both complex and costly.

It is known to operate conveyors under sub-zero temperatures conditions for conveying frozen and chilled foods. A disadvantage of this is that the conveyor has to be brought back to room temperature before it can be cleaned. This is both time consuming and costly.

Thus, in accordance with this invention as seen from a second aspect, there is provided a conveyor comprising a plurality of upwardly-facing receptacles mounted in series to means for conveying the receptacles along an elongate path, the internal compartment of each receptacle being lined with a removable liner.

The provision of the liner means that the receptacles do not have to be cleaned. Instead, the liners merely have to be removed and replaced with clean ones. The liners may be discarded or cleaned following use.

Preferably the liners are a vacuum moulding of thin plastics material.

Preferably the liners are coloured, so that different coloured liners can be used for conveying different foodstuffs.

Preferably each receptacle is pivotally mounted to said conveyor means for rotation about an axis which extends perpendicular to the direction of conveyance along said path, the receptacles each comprising opposed first and second end walls extending perpendicular to the direction of conveyance, and a lip across the upper end of said first wall which extends away from said second wall and overhangs the second wall of an adjacent receptacle, the outer end of the lip depending towards the interior of said adjacent receptacle, means being provided at least one point along said path for rotating the successive passing receptacles about said axis in a direction which brings the lip of one receptacle into a position where the outer end thereof extends into the interior of its adjacent receptacle, said liners extending over said lips.

It is often desirable to be able to determine the quantity of the material in each receptacle.

Accordingly, in accordance with this invention as seen from a third aspect, there is provided a conveyor comprising a plurality of upwardly-facing receptacles mounted in series to means for conveying the receptacles along an elongate path, each receptacle being suspended by said conveyor means, means being provided at least one point along said path for weighing the successive passing receptacles, said weighing means comprising a raised member arranged to abut and lift the receptacles and a sensor disposed between the member and a fixed surface and arranged to provide an output indicative of the downwards force acting on the raised member.

In one embodiment, the receptacles are removably seated in mountings on the conveyor means, said raised member being arranged to lift the passing receptacles entirely out of their mountings. In this manner the downwards force acting on the member is equal to the entire weight of the receptacle. Thus, the weight of the contents of the receptacle can be determined by subtracting the tare weight of the receptacle away from the measured weight.

In an alternative embodiment, the receptacles are pivotally mounted to the conveyor means, said raised member being arranged to rotatably lift the passing receptacles. Whilst the full weight of the receptacles is not applied to the member when they are pivoted, the actual weight of the receptacles can be determined using a predetermined algorithm.

As hereinbefore mentioned, it is often necessary to clean the receptacles. Hitherto this has involved cleaning each receptacle whilst it is in-situ on the chain or belt. It will be appreciated that this is both difficult and time consuming.

Thus, in accordance with this invention as seen from a fourth aspect, there is provided a conveyor comprising a plurality of upwardly-facing receptacles mounted in series to means for conveying the receptacles along an elongate path, each receptacle being detachably mounted to said conveyor means.

Thus, in order to clean the conveyor, the receptacles can be removed, thereby simplifying the cleaning operation.

Preferably, the receptacles are mounted to the conveyor for rotation about an axis which extends perpendicular to the direction of conveyance along said path.

Preferably, the conveyor means comprises a pair of parallel belts or chains having a plurality of opposed pairs of supports for receiving the respective receptacles therebetween.

Preferably, the receptacles are formed of moulded plastics material, each side wall of the receptacles being moulded with a formation which engages with a said support.

The linear speed of known conveyors is restricted because as the receptacles traverse a bend in the vertical plane, they have a tendency to swing outwards with the momentum of their original movement. The severity of the swing is proportional to the linear speed of the receptacle, which leads to the receptacle spilling its contents at elevated speeds.

Accordingly, in accordance with this invention as seen from a fifth aspect, there is provided a conveyor comprising a plurality of upwardly-facing receptacles mounted in series to means for conveying the receptacles along an elongate path, each receptacle being pivotally mounted to said conveyor means for rotation about an axis which extends perpendicular to the direction of conveyance along said path, and a guide co-extending with the conveyance means around at least bends in the path in the vertical plane, means being provided on the receptacles for engaging the guide to control the pivotal movement thereof.

The guides thus act to prevent the receptacles from pivoting unduly as they traverse bends in the path.

Preferably the receptacles comprise a body portion defining a compartment for receiving the material to be conveyed and a support portion pivotally mounted to the conveyance means, said guide engaging means being provided on the support portion.

In order to control the attitude of the buckets as they travel horizontally, said guide engaging means preferably engages the guide at points disposed forwardly and rearwardly of the pivotal axis of the receptacles.

In order to control the attitude of the buckets as they travel vertically, said guide engaging means preferably engages the guide at points disposed above and below the pivotal axis of the receptacles.

Preferably the guide is arranged to vary the attitude of the receptacle as it traverses a bend in the vertical plane, in order to further alleviate any risk of the receptacles interfering or jamming as they traverse the bend.

Preferably the guide is arranged to at least partially invert the receptacles at an unloading point along the path.

Preferably the receptacles each comprise opposed first and second end walls extending perpendicular to the direction of conveyance, and a lip across the upper end of said first wall which extends away from said second wall and overhangs the second wall of an adjacent receptacle, the outer end of the lip depending towards the interior of said adjacent receptacle, the guide being arranged at point on the conveyor to rotate the successive passing receptacles about said axis in a direction which brings the lip of one receptacle into a position where the outer end thereof extends into the interior of its adjacent receptacle.

Preferably, each receptacle is rotated in a first direction at said point to bring its lip down onto the adjacent receptacle.

In known conveyor systems, there is a problem that the receptacles will not always fill in a uniform manner from a chute. Some materials will heap in one part of the receptacle and will not flow and level. It is important that the receptacles fill in a uniform manner, so that the receptacles can be fully filled and the conveyor can operate at high efficiency with a wide range of materials.

Accordingly, in accordance with this invention as seen from a sixth aspect, there is provided a conveyor comprising a plurality of upwardly-facing receptacles mounted in series to means for conveying the receptacles along an elongate path, each receptacle being suspended by said conveyor means, means being provided at at least one point along said path for settling the contents of successive passing receptacles, said settling means comprising a member arranged to abut the receptacles and means for vibrating the member.

The vibration of the receptacle automatically levels and settles the contents of the passing receptacles, irrespective of the type or makeup of the material. To further increase the levelling efficiency, the frequency of the vibration can be adjusted to suit the particular material being carried, this can easily be achieved by those skilled in the art.

Preferably, the settlement means is disposed at a point where the receptacles are filled.

Preferably each receptacle is pivotally mounted to said conveyor means for rotation about an axis which extends perpendicular to the direction of conveyance along said path, a guide co-extending with the conveyance means along at least a portion of the path, means being provided on the receptacles for engaging the guide to control the pivotal movement thereof, said vibrating means being arranged to vibrate a portion of the guide.

Preferably the member at least partially supports said passing receptacles.

Embodiments of this invention will now be described by way of examples only and with reference to the accompanying drawings, in which:
Figure 1 is a schematic side view of an embodiment of conveyor in accordance with this invention in a C-shaped configuration;
Figure 2 is a schematic side view of an embodiment of conveyor in accordance with this invention in a Z-shaped configuration;
Figure 3 is a perspective view of a receptacle of the conveyor of Figure 1 or Figure 2;
Figure 4 is a sectional view along the line IV-IV of Figure 1 or Figure 2; and
Figure 5 is a sectional view along the line V-V of Figure 4;
Figure 6 is a side view illustrating how the attitude of the receptacles of the conveyor of Figure 1 or Figure 2 is maintained;
Figure 7 is a sectional view along the line VII-VII of Figure 6;
Figure 8 is a side view illustrating how the attitude of the receptacles of the conveyor of Figure 1 or Figure 2 is varied; and
Figure 9 is a sectional view along the line IX-IX of Figure 8.

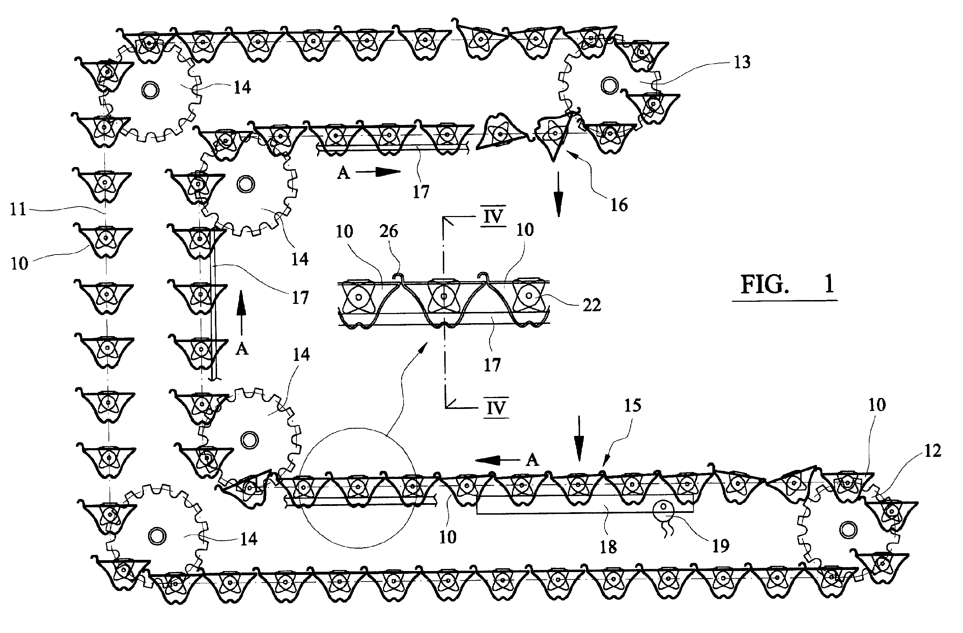

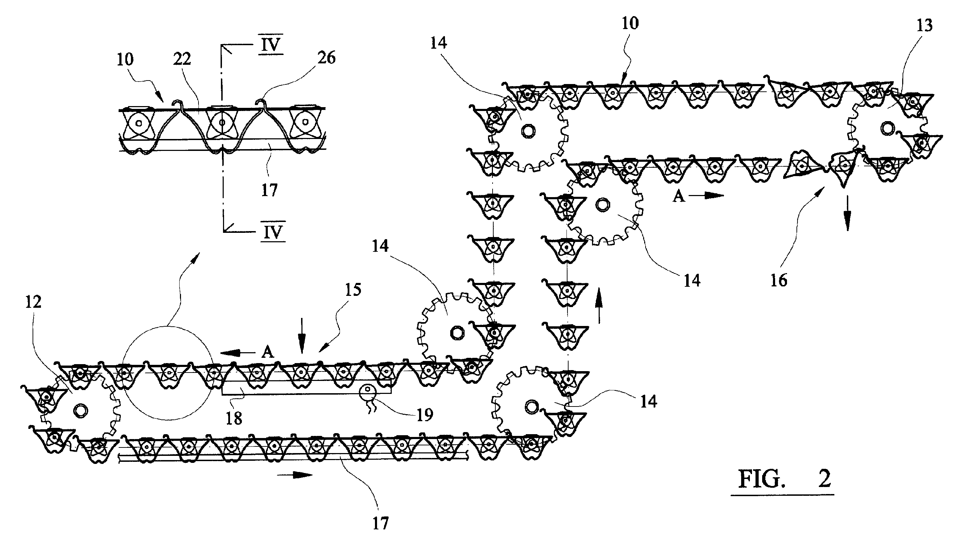

Referring to Figures 1 and 2 of the drawings, there is shown a conveyor comprising a plurality of receptacles or so-called buckets 10 each mounted between a pair of spaced parallel endless drive chains 11, which pass over sprockets 12 and 13 at opposite ends of the conveying line.

The chain 11 passes around intermediate sprockets 14 as the chain changes direction in the vertical plane. In this manner a plurality of different configurations of the conveyor can be achieved, as shown in Figures 1 and 2.

A motor (not shown) is drivably connected to the shaft of one the sprockets 12,13 in any suitable manner to cause predetermined uniform travel of the chains 11 in a direction A. On the bottom run of the conveyor, there is a loading station 15 where the product to be conveyed is loaded into the buckets 10 of the conveyor. Thereafter the buckets 10 travel along the conveyor to a discharge station 16 on its upper run.

As will be described hereinafter, the buckets 10 are pivotally mounted between the drive chains 11 for pivotal movement about respective rotational axis which extend perpendicular to the direction of movement A.

During the course of travel of the buckets 10 along the conveyor their attitude is controlled by a guide rail 17 which co-extends with one of the chains 11, at a position which is slightly below the chains 11 when the chain is running longitudinally and which is slightly to one side of the chain 11 when the chain 11 is running vertically.

The guide rail 17 is engaged by a cam 20 mounted to a support portion of the buckets 10. At the loading station 15, the cams 20 of the buckets 10 abut a separate member 18, which co-extends with the guide 17 and which is connected to a motor 19 arranged to vibrate the member 18 whilst the buckets 10 are being filled.

At a further point on the conveyor (not shown) the cams 20 on the body of the passing buckets 10 may abut another separate member which rotates the passing buckets 10 slightly. The downwards force applied by the buckets 10 to the member is transferred to a load cell which provides an indication of the force. From this, the actual mass of the material in the bucket 10 can be calculated using an algorithm which takes account of the fact that a portion of the mass of the bucket 10 is applied to the chain via the pivot supports of the bucket 10. The algorithm also takes account of the tare weight of the bucket 10.

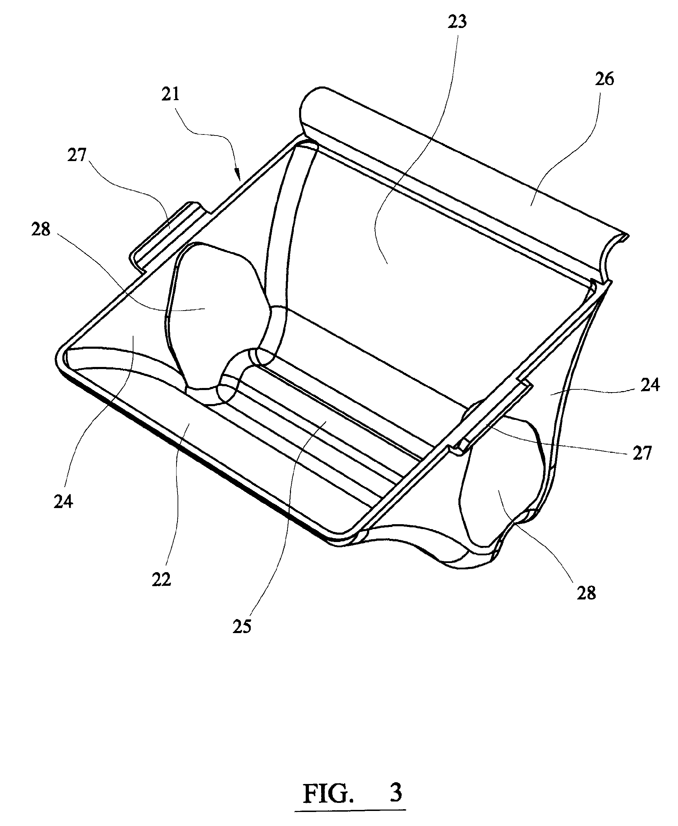

Referring to Figure 3 of the drawings, the buckets 10 comprise a one-piece body portion 21 formed of moulded plastics material and having front and rear walls 22, 23, opposite side walls 24, and a bottom wall 25, defining an interior compartment having an open top.

The opposite side walls 24 lie parallel to each other and are generally triangular in shape. The front and rear walls 22, 23 diverge away from the bottom wall 25 towards the open top. The side walls 22, 23 are in fact slightly concave in their vertical cross-section, with the radius of curvature being substantially equal to the radius of the sprockets 12, 13, 14.

A lip 26 extends across the upper edge of the rear wall 23. The lip 26 extends upwardly and then turns outwards before turning vertically downwardly at its outer end.

A pair of upwardly-extending lugs 27 project outwardly from the upper edge of opposite side walls 24 of the body 21.

The outer surface of each side wall 24 is also formed with a recess 28, which extends from the lower end of the side wall to the upper end and increases gradually in depth.

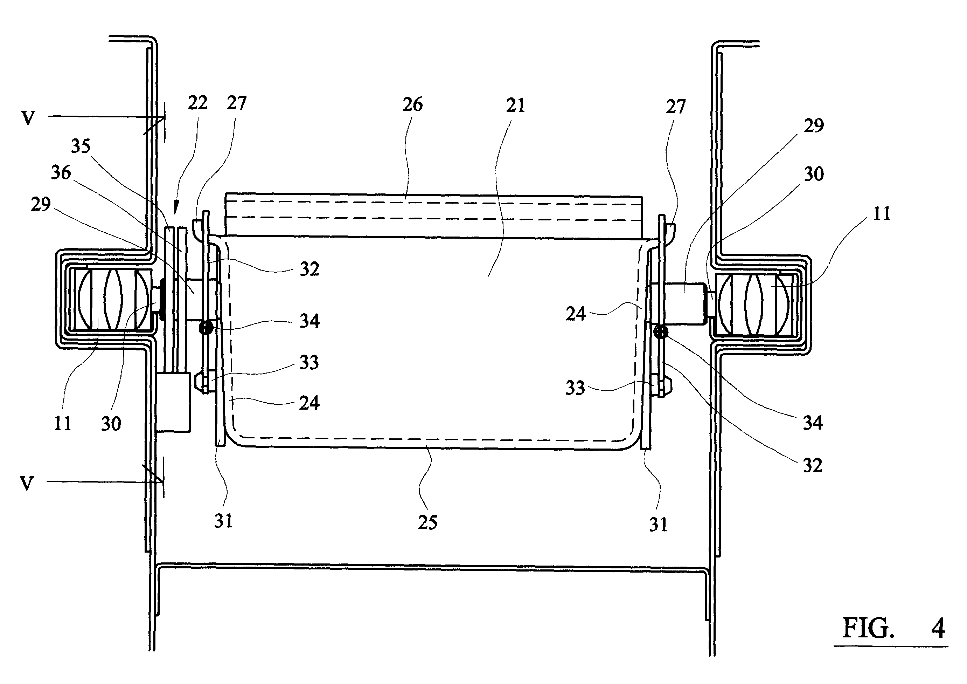

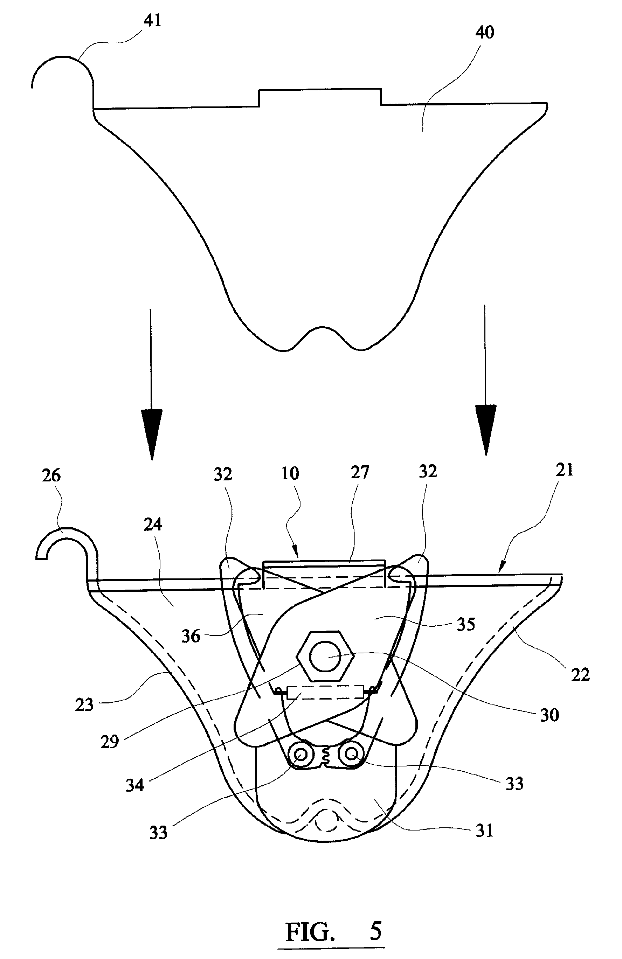

Referring to Figures 4 and 5 of the drawings, each bucket 10 further comprises a support assembly attached to the opposite side walls 24 of the body 21 of the bucket 10. The support assembly comprises a pair of tubular bushes 29 which respectively receive opposed support pins 30 projecting inwardly from the respective chains 11 towards the centre of the conveyor.

The inner end of each bush 20 is connected to a flat plate 31 mounted normal to its longitudinal axis. The plates 31 are dimensioned to fit into respective recesses 28 formed on opposite side walls 24 of the body 21 of the buckets 10 by sliding the body 21 vertically downwards between the plates 31 until the upper edge of the plates 31 abut the upper end edges of their respective recess 28.

Each plate 31 carries a pair of upwardly-extending jaws 32, which are pivotally mounted at their lower ends to the lower end of the plate 31 at 33 for rotation about an axis which extends perpendicular to the plane of the plate 31. The jaws 32 are geared to each, so that they move apart when one jaw 32 is pivoted. The upper ends of the jaws 32 are spaced apart and extend beyond the upper edge of the plate 31. The jaws 32 each have an upper end edge which is inclined inwardly and downwardly and is arranged to abut a respective side edge of the lug 27 on its respective side of the body 21 of the bucket 10. A spring 34 extends between the jaws 32.

As the body 21 of the bucket 10 is mounted to the support, the upper ends of the jaws 32 are forced apart against the bias of the spring 33 as they abut the lugs 27. Once fully mounted, a surface of the outer ends of the jaws 32 engage over the upper surface of the lugs 27, thereby securely retaining the body 21 of the bucket 10.

As hereinbefore described, the support of the buckets 10 comprises a cam 22 which consists of two identical cam portions 35, 36 mounted back-to-back on the bush 29 on one side of the support assembly.

Each cam portion 35, 36 comprises a flat trapezoidal or diamond-shaped plate which is mounted at its centre on the bush 29, in a plane which extends normal to the bush 29. The cam portions 35, 36 are elongated in one axis only, such that they have a longitudinal axis which is greater than their transverse axis. The corners at opposite longitudinal ends of the cam portion are rounded.

One of the cam portion 35 is mounted to the bush 29., such that its longitudinal axis lies at approximately 45° to the horizontal when the bucket 10 is in its normal upwardly-facing attitude on the conveyor. The other cam portion 36 is mounted at 90° to the first cam portion 35.

It will be appreciated that the cam portions 35, 36 thus provide the cam 22 with four lobes lying at 90° to each other around the bush 29.

When the buckets 10 are travelling horizontally along the upper or lower runs of the conveyor, the lowermost lobes of the cam portion 35, 36 abut the guide rail 17 and thereby prevent the buckets 10 from rotating in opposite senses respectively and keep the bucket 10 in a generally upright attitude as it travels horizontally.

As a bucket 10 traverses a corner in the vertical plane, its leading lowermost lobe leaves the guide rail 17 and at the same time, one of its uppermost lobes abuts the guide rail 17, thereby maintaining control over the attitude of the bucket 10. As the bucket 10 moves further around the bend, its lagging lowermost lobe leaves the guide rail 17 and the lobe below the uppermost one already on the rail 17 abuts the rail 17. The two vertically aligned lobes now in contact with the rail 17 prevent the buckets 10 from rotating in opposite senses respectively and keep the bucket 10 in a generally upright attitude as it travels vertically.

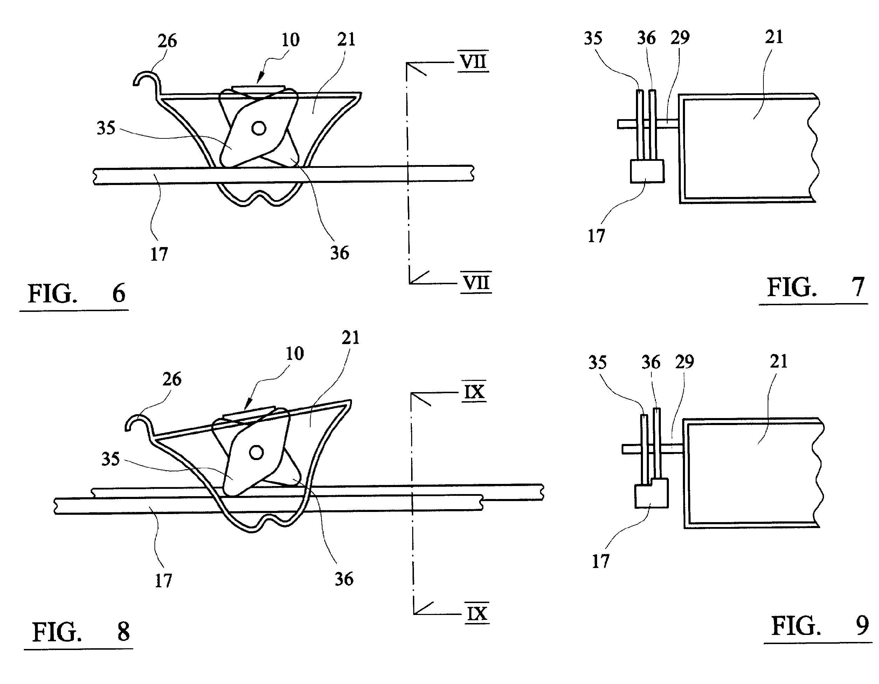

Referring to Figures 6 to 9 of the drawings, it will appreciated that the cam portions 35, 36 lie in different planes which are slightly spaced apart. The attitude of the buckets 10 can thus be varied by arranging the guide rail 17, so that the two lobes abut respective portions of the guide rail 17 which are set in different planes.

Accordingly, at the filing station 15, the lobes of the cam portions 35, 36 respectively abut surfaces of the member 18 which are in different planes to rotate the buckets 10 into a position where their lips 26 engage over the front wall 22 of their adjacent bucket 10. Thus, the lips 26 sealingly span the gap between adjacent buckets 10 and prevent the material that is being loaded into the buckets 10 from being spilled. The buckets 10 then rotate back into the fully upright position, where they are free to move independently of each other.

Similarly, the lobes of the cam portion 35, 36 can respectively abut surfaces of the guide rail 17 which are in different planes as the buckets 10 traverse corners in the vertical planes, so that the attitude of the buckets 10 are controlled in a manner which prevents them from interfering and jamming as the corners are traversed. The concave shape of the front and rear walls 22, 23 of the buckets 10 also help to avoid interference and jamming, thereby enabling the buckets 10 to be closely spaced on the conveyor.

At the discharge station 16, the cam portion 35, 36 again respectively abut surfaces of the guide rail 17 which are in a different plane, so that the buckets 10 are rotated into an empty position.

Referring again to Figure 5 of the drawings, a vacuum formed disposable plastics liner 40 may be provided for fitting inside the body 21 of each bucket 10. The liner 40 has a corresponding shape to the body 21 and is provided with a lip 41 which extends over the lip 26 of the body 26.

The liners 40 thereby keep the body 21 of each bucket 10 clean and avoid the need to clean the bodies 21 as regularly. The liners 40 can easily be removed and discarded if necessary. The body 21 of each bucket 10 can be removed for cleaning by releasing the jaws 32.

A conveyor in accordance with this invention is relatively simple in construction, yet provides an efficient way of conveying material between two points which does not suffer from the disadvantages of known conveyors.

## Claims

1. A conveyor comprising a plurality of upwardly-facing receptacles mounted in series to means for conveying the receptacles along an elongate path, each receptacle being pivotally mounted to said conveyor means for rotation about an axis which extends perpendicular to the direction of conveyance along said path, the receptacles each comprising opposed first and second end walls extending perpendicular to the direction of conveyance, and a lip across the upper end of said first wall which extends away from said second wall and overhangs the second wall of an adjacent receptacle when the adjacent receptacles are arranged generally horizontally, the outer end of the lip depending towards the interior of said adjacent receptacle, means being provided at least one point along said path for rotating the successive passing receptacles about said axis in a direction which brings the lip of one receptacle into a position where the outer end thereof extends into the interior of its adjacent receptacle.

2. A conveyor as claimed in claim 1, in which the lip of each receptacle extends upwardly and outwardly from the upper end of its first wall and then outwardly and downwardly towards the interior of its adjacent receptacle.

3. A conveyor as claimed in claims 1 or 2, in which the first and second walls of each receptacle converge towards the base of thereof.

4. A conveyor as claimed in claim 3, in which the convergent walls curve inwardly towards each other.

5. A conveyor as claimed in claim 3, in which the convergent walls curve inwardly towards each other, with the radius of curvature substantially corresponding to the radius of curvature of bends in the path in the vertical plane.

6. A conveyor comprising a plurality of upwardly-facing receptacles mounted in series to means for conveying the receptacles along an elongate path, the internal compartment of each receptacle being lined with a removable liner.

7. A conveyor as claimed in claim 6, in which the liners are a vacuum moulding of thin plastics material.

8. A conveyor as claimed in claims 6 or 7, in which each receptacle is pivotally mounted to said conveyor means for rotation about an axis which extends perpendicular to the direction of conveyance along said path, the receptacles each comprising opposed first and second end walls extending perpendicular to the direction of conveyance, and a lip across the upper end of said first wall which extends away from said second wall and overhangs the second wall of an adjacent receptacle when the adjacent receptacles are arranged generally horizontally, the outer end of the lip depending towards the interior of said adjacent receptacle, means being provided at least one point along said path for rotating the successive passing receptacles about said axis in a direction which brings the lip of one receptacle into a position where the outer end thereof extends into the interior of its adjacent receptacle, said liners extending over said lips.

9. A conveyor comprising a plurality of upwardly-facing receptacles mounted in series to means for conveying the receptacles along an elongate path, each receptacle being suspended by said conveyor means, means being provided at least one point along said path for weighing the successive passing receptacles, said weighing means comprising a raised member arranged to abut and lift the receptacles and a sensor disposed between the member and a fixed surface and arranged to provide an output indicative of the downwards force acting on the raised member.

10. A conveyor as claimed in claim 9, in which the receptacles are removably seated in mountings on the conveyor means, said raised member being arranged to lift the passing receptacles entirely out of their mountings.

11. A conveyor as claimed in claim 9, in which the receptacles are pivotally mounted to the conveyor means, said raised member being arranged to rotatably lift the passing receptacles.

12. A conveyor comprising a plurality of upwardly-facing receptacles mounted in series to means for conveying the receptacles along an elongate path, each receptacle being detachably mounted to said conveyor means.

13. A conveyor as claimed in claim 12, in which the receptacles are mounted to the conveyor for rotation about an axis which extends perpendicular to the direction of conveyance along said path.

14. A conveyor as claimed in claims 12 or 13, in which the conveyor means comprises a pair of parallel belts or chains having a plurality of opposed pairs of supports for receiving the respective receptacles therebetween.

15. A conveyor as claimed in claim 14, in which the receptacles are formed of moulded plastics material, each side wall of the receptacles being moulded with a formation which engages with a said support.

16. A conveyor comprising a plurality of upwardly-facing receptacles mounted in series to means for conveying the receptacles along an elongate path, each receptacle being pivotally mounted to said conveyor means for rotation about an axis which extends perpendicular to the direction of conveyance along said path, and a guide co-extending with the conveyance means around at bends in the path in the vertical plane, means being provided on the receptacles for engaging the guide to control the pivotal movement thereof.

17. A conveyor as claimed in claim 16, in which the receptacles comprise a body portion defining a compartment for receiving the material to be conveyed and a support portion pivotally mounted to the conveyance means, said guide engaging means being provided on the support portion.

18. A conveyor as claimed in claims 16 or 17, in which said guide engaging means on each receptacle engages the guide at points disposed forwardly and rearwardly of the pivotal axis of the receptacle.

19. A conveyor as claimed in any of claims 16 to 18, in which said guide engaging means on each receptacle engages the guide at points disposed above and below the pivotal axis of the receptacle.

20. A conveyor as claimed in any of claims 16 to 19, in which the guide is arranged to vary the attitude of each receptacle as it traverses a bend in the vertical plane.

21. A conveyor as claimed in any of claims 16 to 20, in which the guide is arranged to at least partially invert the receptacles at an unloading point along the path.

22. A conveyor as claimed in any of claims 16 to 21, in which the receptacles each comprise opposed first and second end walls extending perpendicular to the direction of conveyance, and a lip across the upper end of said first wall which extends away from said second wall and overhangs the second wall of an adjacent receptacle, the outer end of the lip depending towards the interior of said adjacent receptacle, the guide being arranged at point on the conveyor to rotate the successive passing receptacles about said axis in a direction which brings the lip of one receptacle into a position where the outer end thereof extends into the interior of its adjacent receptacle.

23. A conveyor comprising a plurality of upwardly-facing receptacles mounted in series to means for conveying the receptacles along an elongate path, each receptacle being suspended by said conveyor means, means being provided at at least one point along said path for settling the contents of successive passing receptacles, said settling means comprising a member arranged to abut the receptacles and means for vibrating the member.

24. A conveyor as claimed in claim 23, in which the settlement means is disposed at a point where the receptacles are filled.

25. A conveyor as claimed in claims 23 or 24, in which each receptacle is pivotally mounted to said conveyor means for rotation about an axis which extends perpendicular to the direction of conveyance along said path, a guide co-extending with the conveyance means along at least a portion of the path, means being provided on the receptacles for engaging the guide to control the pivotal movement thereof, said vibrating means being arranged to vibrate a portion of the guide.
